(19) Europäisches Patentamt
European Patent Office
Office européen des brevets

(11) **EP 3 212 447 B1**

(12) **EUROPÄISCHE PATENTSCHRIFT**

(45) Veröffentlichungstag und Bekanntmachung des Hinweises auf die Patenterteilung:
**07.04.2021** **Patentblatt 2021/14**

(21) Anmeldenummer: **15787582.4**

(22) Anmeldetag: **29.10.2015**

(51) Int Cl.:
*B60K 6/48* *(2007.10)* *B60K 6/365* *(2007.10)*
*B60K 6/387* *(2007.10)* *F16H 3/72* *(2006.01)*
*F16H 48/36* *(2012.01)* *F16H 48/10* *(2012.01)*

(86) Internationale Anmeldenummer:
**PCT/EP2015/075069**

(87) Internationale Veröffentlichungsnummer:
**WO 2016/066732 (06.05.2016 Gazette 2016/18)**

(54) **GETRIEBEEINRICHTUNG FÜR EIN KRAFTFAHRZEUG**

GEARING DEVICE FOR A MOTOR VEHICLE

DISPOSITIF DE TRANSMISSION POUR VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2014 DE 102014016077**

(43) Veröffentlichungstag der Anmeldung:
**06.09.2017 Patentblatt 2017/36**

(73) Patentinhaber: **Audi AG**
**85045 Ingolstadt (DE)**

(72) Erfinder: **MEIXNER, Christian**
**85049 Ingolstadt (DE)**

(74) Vertreter: **Lehle, Josef**
**AUDI AG**
**Patentabteilung**
**85045 Ingolstadt (DE)**

(56) Entgegenhaltungen:
**DE-A1-102009 056 366    DE-A1-102010 036 240**
**DE-A1-102013 202 382**

**Beschreibung**

Die Erfindung betrifft eine Getriebeeinrichtung für ein Kraftfahrzeug mit den Merkmalen des Oberbegriffs von Anspruch 1.

Eine derartige Getriebeeinrichtung dient beispielsweise dem Übertragen eines Drehmoments zwischen dem Antriebsaggregat des Kraftfahrzeugs einerseits sowie der Radachse des Kraftfahrzeugs andererseits. Über die Getriebeeinrichtung ist die Radachse mit dem Antriebsaggregat wirkverbunden beziehungsweise an dieses angebunden. Die Radachse liegt entsprechend als angetriebene Radachse vor und kann als Vorderachse oder als Hinterachse des Kraftfahrzeugs ausgestaltet sein. Die Getriebeeinrichtung weist die Eingangswelle sowie die erste Ausgangswelle und die zweite Ausgangswelle auf.

Die Eingangswelle ist an das Antriebsaggregat angeschlossen beziehungsweise mit diesem wirkverbunden. In der Wirkverbindung zwischen der Eingangswelle der Getriebeeinrichtung und dem

Antriebsaggregat liegen vorzugsweise ein Schaltgetriebe und/oder eine Kupplung, insbesondere eine Anfahrkupplung, vor. Das Antriebsaggregat kann als Brennkraftmaschine, elektrische Maschine oder als Hybridantriebsaggregat ausgestaltet sein, wobei das Hybridantriebsaggregat vorzugsweise sowohl eine Brennkraftmaschine als auch eine elektrische Maschine aufweist.

Die Radachse des Kraftfahrzeugs weist die erste Teilachse und die zweite Teilachse auf, wobei vorzugsweise jeder der Teilwellen jeweils wenigstens ein Rad des Kraftfahrzeugs zugeordnet ist. Die erste Ausgangswelle ist über das erste Getriebe mit der ersten Teilwelle und die zweite Ausgangswelle über das zweite Getriebe mit der zweiten Teilwelle wirkverbindbar beziehungsweise wirkverbunden. Mithilfe der Getriebe wird also eine Umsetzung von der ersten Ausgangswelle auf die erste Teilwelle und von der zweiten Ausgangswelle auf die zweite Teilwelle vorgenommen. Bevorzugt weisen die Getriebe dasselbe Übersetzungsverhältnis auf.

Beispielsweise ist aus der Druckschrift DE 10 2013 202 382 A1 eine Antriebsvorrichtung für ein Fahrzeug bekannt. Diese kann sowohl einen Hybridantrieb als auch eine Momentenverteilung mit dem gleichen Elektromotor umsetzen und ist zudem konstruktiv einfach aufgebaut. Die Antriebseinrichtung ist mit einem ersten und einem zweiten Motor koppelbar oder gekoppelt, wobei der zweite Motor in Abhängigkeit des Schaltzustands einer Schalteinrichtung für einen Antrieb oder für eine aktive Momentenverteilung nutzbar ist.

Es ist nun Aufgabe der Erfindung, eine Getriebeeinrichtung vorzustellen, welche gegenüber bekannten Getriebeeinrichtungen Vorteile aufweist, insbesondere auf einfache Art und Weise an der Radachse eine "Torque Vectoring"-Funktionalität platzsparend realisiert.

Dies wird erfindungsgemäß mit einer Getriebeeinrichtung mit den Merkmalen des kennzeichnenden Teils von Anspruchs 1 erreicht. Grundsätzlich ist insoweit vorgesehen, dass die Getriebeeinrichtung ein Differentialgetriebe aufweist, über das die erste Ausgangswelle und die zweite Ausgangswelle permanent mit der Eingangswelle permanent wirkverbunden sind, und dass die Getriebeeinrichtung über eine elektrische Maschine verfügt, die über eine erste Kupplung und mit einer ersten Übersetzung, vorzugsweise unmittelbar, mit der Eingangswelle und über eine zweite Kupplung und mit einer zweiten Übersetzung, vorzugsweise unmittelbar, mit einem Drehmomentaufteilungsgetriebe der Getriebeeinrichtung wirkverbindbar ist.

Die Getriebeeinrichtung fasst insoweit das Differentialgetriebe und das Drehmomentaufteilungsgetriebe zusammen. Das Differentialgetriebe stellt dabei die Funktionalität eines Achsdifferentialgetriebes für die Radachse und mithin für die beiden Teilwellen der Radachsen bereit. Mithilfe des Drehmomentaufteilungsgetriebes kann dagegen die "Torque Vectoring"-Funktionalität für die Radachse und entsprechend die beiden Teilwellen der Radachse bereitgestellt werden. Über das Differentialgetriebe ist die Eingangswelle starr und/oder permanent mit sowohl der ersten Ausgangswelle als auch der zweiten Ausgangswelle wirkverbunden, insbesondere unmittelbar. Unter der unmittelbaren Wirkverbindung ist zu verstehen, dass die Eingangswelle, die erste Ausgangswelle und die zweite Ausgangswelle unmittelbar an das Differentialgetriebe angeschlossen sind.

Mithilfe des Drehmomentaufteilungsgetriebes kann das über die Eingangswelle bereitgestellte Drehmoment bei Bedarf auf die erste Teilwelle und die zweite Teilwelle aufgeteilt werden. Zu diesem Zweck ist die elektrische Maschine vorgesehen, welche mit dem Drehmomentaufteilungsgetriebe mittels der zweiten Kupplung wirkverbindbar ist. Durch entsprechendes Ansteuern der elektrischen Maschine und dem gleichzeitigen Herstellen der Wirkverbindung zwischen der elektrischen Maschine und dem Drehmomentaufteilungsgetriebe, kann insoweit die vorstehend genannte Drehmomentaufteilung vorgenommen und entsprechend die "Torque Vectoring"-Funktionalität realisiert werden.

Zusätzlich verfügt die Getriebeeinrichtung über die erste Kupplung. Über diese ist die elektrische Maschine, insbesondere unmittelbar, mit der Eingangswelle wirkverbindbar beziehungsweise koppelbar. Unter der unmittelbaren Wirkverbindung ist hierbei eine Wirkverbindung zu verstehen, welche weder über das Differentialgetriebe noch das Drehmomentaufteilungsgetriebe verläuft. Die Wirkverbindung zwischen der elektrischen Maschine und der Eingangswelle über die erste Kupplung kann mit der ersten Übersetzung realisiert sein, während zwischen der elektrischen Maschine und dem Drehmomentaufteilungsgetriebe die zweite Übersetzung vorliegt. Beispielsweise sind die erste Übersetzung und die zweite Übersetzung voneinander verschieden. Es können jedoch auch identische Übersetzungen realisiert werden.

Besonders bevorzugt ist die zweite Übersetzung gleich Eins, sodass keine zusätzliche Getriebestufe beziehungsweise Zahnradstufe notwendig ist. Die erste Übersetzung ist dagegen vorzugsweise von Eins verschieden, beispielsweise ist eine erste Übersetzung von

$$i = \sqrt{8}$$ oder i = 8 vorgesehen. Insbesondere wird die erste Übersetzung mittels wenigstens einer Getriebestufe beziehungsweise Zahnradstufe realisiert, welche zu diesem Zweck in der Wirkverbindung zwischen der elektrischen Maschine und der Eingangswelle angeordnet ist. Besonders bevorzugt ist die Getriebestufe in der Wirkverbindung zwischen der elektrischen Maschine und der ersten Kupplung angeordnet. Es kann jedoch auch eine Anordnung in der Wirkverbindung zwischen der ersten Kupplung und der Eingangswelle vorgesehen sein.

Durch die Anbindung der elektrischen Maschine an die Eingangswelle über die erste Kupplung kann beispielsweise ein Fahrbetrieb des Kraftfahrzeugs elektromotorisch unterstützt werden, indem das von der elektrischen Maschine bereitgestellte Drehmoment dem an der Eingangswelle anliegenden Drehmoment überlagert wird. Insoweit kann es vorgesehen sein, dass das an der Eingangswelle anliegende Drehmoment von dem Antriebsaggregat und der elektrischen Maschine gemeinsam erzeugt wird. Selbstverständlich ist es auch möglich, die elektrische Maschine generatorisch zu betreiben und insoweit zur Bereitstellung von elektrischer Energie zu verwenden.

Das erste Getriebe und das zweite Getriebe können grundsätzlich beliebig ausgestaltet sein. Beispielsweise liegen sie als Stirnradgetriebe vor. Hierbei ist vorzugsweise die erste Ausgangswelle parallel zu der ersten Teilwelle und die zweite Ausgangswelle parallel zu der zweiten Teilwelle angeordnet. Es kann jedoch auch vorgesehen sein, dass die Teilwellen der Radachse und die Ausgangswellen der Getriebeeinrichtung miteinander einen Winkel einschließen, welcher größer als Null Grad und kleiner als 180 Grad ist. Beispielsweise beträgt der Winkel 90 Grad, sodass also die Teilwellen der Radachse jeweils rechtwinklig zu der entsprechenden Ausgangswelle angeordnet sind. Bei einer angewinkelten Anordnung zumindest einer der Teilwellen zu der entsprechenden Ausgangswelle kann das entsprechende Getriebe als Winkelgetriebe vorliegen. Beispielsweise sind beide Getriebe als Winkelgetriebe, insbesondere als Kegelradgetriebe, ausgeführt.

Beispielsweise sind die Teilwellen der Radachse rechtwinklig zu einer Längsmittelachse des Kraftfahrzeugs angeordnet. Dies kann gemäß den vorstehenden Ausführungen ebenfalls für die Ausgangswellen zutreffen. Es kann jedoch auch der Fall vorliegen, dass die beiden Ausgangswellen der Getriebeeinrichtung in Wesentlichen in Richtung der Längsmittelachse beziehungsweise parallel zu dieser angeordnet sind. Besonders bevorzugt verlaufen die Ausgangswellen der Ge

triebeeinrichtung koaxial zueinander oder parallel zueinander. Die Getriebeeinrichtung liegt in der Wirkverbindung zwischen dem Antriebsaggregat und den Getrieben vor. Mit einer derartigen Anordnung der Getriebeeinrichtung ist ein kompakter Aufbau der Radachse gewährleistet.

In einer besonders bevorzugten Ausgestaltung der Erfindung kann vorgesehen sein, dass mehrere erste Kupplungen vorgesehen sind, über die die elektrische Maschine mit voneinander verschiedenen ersten Übersetzungen unmittelbar mit der Eingangswelle wirkverbindbar sind. Beim Herstellen der Wirkverbindung zwischen der elektrischen Maschine und mittels einer dieser ersten Kupplungen liegt insoweit eine erste Übersetzung vor. Beim Herstellen der Wirkverbindung zwischen einer weiteren der ersten Kupplungen dagegen eine von dieser Übersetzung verschiedene Übersetzung. Insoweit kann zunächst eine gewünschte Übersetzung zwischen der elektrischen Maschine und der Eingangswelle aus mehreren verfügbaren Übersetzungen ausgewählt und anschließend die entsprechende erste Kupplung geschlossen werden, um die gewünschte Übersetzung zu realisieren.

Weiterhin ist vorgesehen, dass das Drehmomentaufteilungsgetriebe als Planetengetriebe vorliegt, das ein Drehmomentaufteilungsgetriebehohlrad, einen Drehmomentaufteilungsgetriebeplanetenträger und ein Drehmomentaufteilungsgetriebesonnenrad aufweist, wobei das Drehmomentaufteilungsgetriebehohlrad unmittelbar mit dem Differentialgetriebe, der Drehmomentaufteilungsgetriebeplanetenträger unmittelbar mit der zweiten Ausgangswelle und das Drehmomentaufteilungsgetriebesonnenrad über die zweite Kupplung unmittelbar mit der elektrischen Maschine wirkverbunden ist.

Auch das Drehmomentaufteilungsgetriebe ist insoweit als Planetengetriebe ausgestaltet und weist entsprechend das Hohlrad, den Planetenträger und das Sonnenrad auf. Erneut ist unter der unmittelbaren Wirkverbindung zu verstehen, dass diese nicht über das Drehmomentaufteilungsgetriebe vorliegt, sondern dass die Wirkverbindung zwischen dem Drehmomentaufteilungsgetriebehohlrad und dem Differentialgetriebe sowie die Wirkverbindung zwischen dem Drehmomentaufteilungsgetriebeplanetenträger und der zweiten Ausgangswelle jeweils starr und/oder permanent vorliegt. Die Wirkverbindung zwischen der elektrischen Maschine und dem Drehmomentaufteilungsgetriebesonnenrad liegt zwar ebenfalls unmittelbar vor, ist jedoch mittels der zweiten Kupplung unterbrechbar beziehungsweise herstellbar.

Zudem ist vorgesehen, dass an dem Drehmomentaufteilungsgetriebeplanetenträger ein Drehmomentaufteilungsgetriebeinnenplanetenrad und ein mit dem Drehmomentaufteilungsgetriebeinnenplanetenrad kämmendes Drehmomentaufteilungsgetriebeaußenplanetenrad drehbar gelagert sind, wobei das Drehmomentaufteilungsgetriebeinnenplanetenrad mit dem Drehmomentaufteilungsgetriebesonnenrad kämmt. Auch das Drehmomentaufteilungsgetriebe liegt insoweit als Doppelplanetengetriebe vor. Das bedeutet, dass das Drehmomentaufteilungsgetriebeinnenplanetenrad und das Drehmomentaufteilungsgetriebeaußenplanetenrad an dem Drehmomentaufteilungsgetriebeplanetenträger vorgesehen und dort drehbar gelagert sind. Das Drehmomentaufteilungsgetriebeinnenplanetenrad und das Drehmomentaufteilungsgetriebeaußenplanetenrad kämmen miteinander und sind dabei vorzugsweise an bezüglich der Drehachse des Drehmomentaufteilungsgetriebeplanetenträgers unterschiedlichen Radialpositionen angeordnet. Das Drehmomentaufteilungsgetriebeinnenplanetenrad kämmt nun mit dem Drehmomentaufteilungsgetriebesonnenrad. Schließlich ist vorgesehen, dass das Drehmomentaufteilungsgetriebeaußenplanetenrad mit dem Drehmomentaufteilungsgetriebehohlrad kämmt oder mit einem mit dem Drehmomentaufteilungsgetriebehohlrad kämmenden Hilfsplanetenrad wirkverbunden ist. In jedem Fall ist eine unmittelbare Wirkverbindung zwischen dem Drehmomentaufteilungsgetriebeaußenplanetenrad und dem Drehmomentaufteilungsgetriebehohlrad vorgesehen. Entweder kämmen die beiden Drehmomentaufteilungsgetriebeplanetenräder unmittelbar miteinander oder dem Drehmomentaufteilungsgetriebeaußenplanetenrad ist das Hilfsplanetenrad zugeordnet, welches mit dem Drehmomentaufteilungsgetriebehohlrad kämmt beziehungsweise in dieses eingreift.

Das Hilfsplanetenrad ist vorzugsweise starr und/oder permanent mit dem Drehmomentaufteilungsgetriebeaußenplanetenrad wirkverbunden und weist dabei insbesondere dieselbe Drehachse auf. Vorzugsweise ist das Hilfsplanetenrad ebenso wie das Drehmomentaufteilungsgetriebeaußenplanetenrad an dem Drehmomentaufteilungsgetriebeplanetenträger drehbar gelagert. Beispielsweise ist das Hilfsplanetenrad einstückig mit dem Drehmomentaufteilungsgetriebeaußenplanetenrad ausgebildet oder bildet einen Bestandteil von diesem.

Die Erfindung betrifft selbstverständlich auch ein Kraftfahrzeug mit einer Getriebeeinrichtung, welche bevorzugt gemäß dieser Beschreibung ausgebildet ist. Das Kraftfahrzeug weist die Radachse mit der ersten Teilwelle und der zweiten Teilwelle auf. Die Getriebeeinrichtung verfügt über eine mit einem Antriebsaggregat des Kraftfahrzeugs wirkverbundene Eingangswelle sowie eine erste Ausgangswelle und eine zweite Ausgangswelle, wobei die erste Ausgangswelle über ein erstes Getriebe mit einer ersten Teilwelle einer Radachse des Kraftfahrzeugs und die zweite Ausgangswelle über ein zweites Getriebe mit einer zweiten Teilwelle der Radachse wirkverbunden ist.

Dabei ist vorgesehen, dass die Getriebeeinrichtung ein Differentialgetriebe aufweist, über das die erste Ausgangswelle und die zweite Ausgangswelle permanent mit der Eingangswelle wirkverbunden sind, und dass die Getriebeeinrichtung über eine elektrische Maschine verfügt, die über eine erste Kupplung und mit einer ersten Übersetzung unmittelbar mit der Eingangswelle und über eine zweite Kupplung und mit einer zweiten Übersetzung unmittelbar mit einem Drehmomentaufteilungsgetriebe der Getriebeeinrichtung wirkverbindbar ist. Das Kraftfahrzeug beziehungsweise die Getriebeeinrichtung des Kraftfahrzeugs kann gemäß der vorliegenden Beschreibung weitergebildet sein.

Eine Weiterbildung der Erfindung sieht vor, dass das Differentialgetriebe als Planetengetriebe vorliegt, das ein Differentialgetriebehohlrad, einen Differentialgetriebeplanetenträger und ein Differentialgetriebesonnenrad aufweist, wobei die Eingangswelle mit dem Differentialgetriebehohlrad, der Differentialgetriebeplanetenträger mit der ersten Ausgangswelle und das Differentialgetriebesonnenrad mit der zweiten Ausgangswelle unmittelbar wirkverbunden ist. Unter der unmittelbaren Wirkverbindung ist in diesem Zusammenhang zu verstehen, dass sie jeweils unmittelbar zwischen der genannten Welle und dem genannten Rad des Differentialgetriebes vorliegt und nicht lediglich über das Differentialgetriebe hergestellt ist. Die Eingangswelle ist insoweit mit dem Differentialgetriebehohlrad, der Differentialgetriebeplanetenträger mit der ersten Ausgangswelle und das Differentialgetriebesonnenrad mit der zweiten Ausgangswelle verbunden beziehungsweise an der jeweiligen Welle befestigt. Die Wirkverbindung ist vorzugsweise jeweils starr und/oder permanent ausgestaltet.

In einer weiteren Ausgestaltung der Erfindung ist vorgesehen, dass an dem Differentialgetriebeplanetenträger wenigstens ein Differentialgetriebeinnenplanetenrad und ein mit dem Differentialgetriebeinnenplanetenrad kämmendes Differentialgetriebeaußenplanetenrad drehbar gelagert sind, wobei das Differentialgetriebeaußenplanetenrad mit dem Differentialgetriebehohlrad und das Differentialgetriebeinnenplanetenrad mit dem Differentialgetriebesonnenrad kämmt. Das Differentialgetriebe ist insoweit als Doppelplanetengetriebe ausgebildet. Entsprechend ist sowohl das Differentialgetriebeinnenplanetenrad als auch das Differentialgetriebeaußenplanetenrad vorgesehen, über welche das Differentialgetriebehohlrad und das Differentialgetriebesonnenrad in Wirkverbindung stehen.

Sowohl das Differentialgetriebeinnenplanetenrad als auch das Differentialgetriebeaußenplanetenrad sind an dem Differentialgetriebeplanetenträger drehbar angeordnet beziehungsweise gelagert. Sie kämmen miteinander, während gleichzeitig das Differentialgetriebeaußenplanetenrad mit dem Differentialgetriebehohlrad und das Differentialgetriebeinnenplanetenrad mit dem Differentialgetriebesonnenrad kämmt beziehungsweise in dieses eingreift. Das Differentialgetriebeaußenplanetenrad und das Differentialgetriebeinnenplanetenrad können an bezüglich der Drehachse des Differentialgetriebeplanetenträgers unterschiedlichen Radialpositionen angeordnet sein.

In einer weiteren Ausgestaltung der Erfindung ist vorgesehen, dass das Drehmomentaufteilungsgetriebe mit der zweiten Ausgangswelle unmittelbar und mit der ersten Ausgangswelle über das Differentialgetriebe wirkverbunden ist. Während also die zweite Ausgangswelle direkt an ein Element des Drehmomentaufteilungsgetriebes angeschlossen ist, liegt die Wirkverbindung zwischen der ersten Ausgangswelle und dem Drehmomentaufteilungsgetriebe lediglich über das Differentialgetriebe und insoweit mittelbar vor.

In einer weiteren vorteilhaften Ausgestaltung der Erfindung ist vorgesehen, dass das Differentialgetriebe und das Drehmomentaufteilungsgetriebe über ein Zwischengetriebe wirkverbunden sind, das als Planetengetriebe vorliegt und ein Zwischengetriebesonnenrad, einen Zwischengetriebeplanetenträger und ein Zwischengetriebehohlrad aufweist, wobei an dem Zwischengetriebeplanetenträger ein Zwischengetriebeplanetenrad drehbar gelagert ist, das mit dem Zwischengetriebesonnenrad und dem Zwischengetriebehohlrad kämmt. Über das Zwischengetriebe ist insoweit die permanente Wirkverbindung zwischen dem Drehmomentaufteilungsgetriebe und dem Differentialgetriebe hergestellt.

Auch das Differentialgetriebe liegt als Planetengetriebe vor und weist entsprechend das Zwischengetriebesonnenrad, den Zwischengetriebeplanetenträger und das Zwischengetriebehohlrad auf. An dem Zwischengetriebeplanetenträger ist das Zwischengetriebeplanetenrad angeordnet beziehungsweise drehbar gelagert. Es kämmt sowohl mit dem Zwischengetriebesonnenrad als auch dem Zwischengetriebehohlrad.

Eine weitere Ausgestaltung der Erfindung sieht vor, dass der Zwischengetriebeplanetenträger mit dem Differentialgetriebeplanetenträger, das Zwischengetriebesonnenrad mit dem Drehmomentaufteilungsgetriebehohlrad und/oder das Zwischengetriebehohlrad mit dem Drehmomentaufteilungsgetriebeplanetenträger unmittelbar wirkverbunden ist.

Liegt die Wirkverbindung zwischen dem Zwischengetriebeplanetenträger und dem Differentialgetriebeplanetenträger vor, so kann das Zwischengetriebeplanetenrad eine gemeinsame Drehachse mit dem Differentialgetriebeinnenplanetenrad oder dem Differentialgetriebeaußenplanetenrad aufweisen. Insbesondere ist es zu diesem Zweck an dem Differentialgetriebeplanetenträger unmittelbar gelagert, sodass insoweit der Differentialgetriebeplanetenträger und der Zwischengetriebeplanetenträger als gemeinsamer Planetenträger ausgebildet sind.

Zusätzlich oder alternativ ist das Zwischengetriebesonnenrad mit dem Drehmomentaufteilungsgetriebehohlrad unmittelbar wirkverbunden. Optional kann zudem das Zwischengetriebehohlrad mit dem Drehmomentaufteilungsgetriebeplanetenträger unmittelbar wirkverbunden sein. Besonders bevorzugt sind wenigstens zwei, insbesondere alle drei der genannten Varianten realisiert, sodass also das Zwischengetriebe über eine Wirkverbindung mit dem Differentialgetriebe und über zwei Wirkverbindungen mit dem Drehmomentaufteilungsgetriebe wirkverbunden ist.

In einer Ausgestaltung, die nicht unter den Gegenstand von Anspruch 1 fällt, ist vorgesehen, dass das Drehmomentaufteilungsgetriebe als Planetengetriebe mit einem ersten Planetenradsatz und einem zweiten Planetenradsatz vorliegt, wobei der erste Planetenradsatz ein erstes Drehmomentaufteilungsgetriebehohlrad, einen ersten Drehmomentaufteilungsgetriebeplanetenträger und ein erstes Drehmomentaufteilungsgetriebesonnenrad aufweist, und wobei der zweite Planetenradsatz ein zweites Drehmomentaufteilungsgetriebehohlrad, einen zweiten Drehmomentaufteilungsgetriebeplanetenträger und ein zweites Drehmomentaufteilungsgetriebesonnenrad aufweist. Das Drehmomentaufteilungsgetriebe liegt insoweit als Kombination von zwei Planetengetrieben mit dem ersten Planetenradsatz und dem zweiten Planetenradsatz vor.

Jeder Planetenradsatz verfügt über ein Hohlrad, einen Planetenträger und ein Sonnenrad, wobei an dem Planetenträger jeweils wenigstens ein Planetenrad drehbar gelagert ist. Beispielsweise sind dabei das erste Drehmomentaufteilungsgetriebehohlrad und das zweite Drehmomentaufteilungsgetriebehohlrad als gemeinsames Drehmomentaufteilungsgetriebehohlrad ausgebildet oder zumindest miteinander wirkverbunden. In letzterem Fall können die Drehmomentaufteilungsgetriebehohlräder in axialer Richtung bezüglich ihrer Drehachse voneinander beabstandet angeordnet sein. Das erste Drehmomentaufteilungsgetriebehohlrad und das zweite Drehmomentaufteilungsgetriebehohlrad sind vorzugsweise koaxial zueinander angeordnet, weisen also dieselbe Drehachse auf.

In einer Weiterbildung dieser nicht erfindungsgemäßen Ausgestaltung ist vorgesehen, dass an dem ersten Drehmomentaufteilungsgetriebeplanetenträger ein erstes Drehmomentaufteilungsgetriebeplanetenrad und an dem zweiten Drehmomentaufteilungsgetriebeplanetenträger ein zweites Drehmomentaufteilungsgetriebeplanetenrad drehbar gelagert ist, wobei das erste Drehmomentaufteilungsgetriebeplanetenrad mit dem ersten Drehmomentaufteilungsgetriebehohlrad sowie dem ersten Drehmomentaufteilungsgetriebesonnenrad und das zweite Drehmomentaufteilungsgetriebeplanetenrad mit dem zweiten Drehmomentaufteilungsgetriebehohlrad und dem zweiten Drehmomentaufteilungsgetriebesonnenrad kämmt. Insoweit liegt wiederum die übliche Ausgestaltung eines Planetengetriebes vor.

In einer Weiterbildung der nicht erfindungsgemäßen Ausgestaltung ist vorgesehen, dass der erste Drehmomentaufteilungsgetriebeplanetenträger mit dem Zwischengetriebesonnenrad und/oder der zweite Drehmomentaufteilungsgetriebeplanetenträger mit dem Zwischengetriebehohlrad unmittelbar wirkverbunden ist. Insoweit liegen auch hier zwei Wirkverbindungen zwischen dem Drehmomentaufteilungsgetriebe und dem Zwischengetriebe vor. Die Wirkverbindungen sind vorzugsweise jeweils starr und/oder permanent ausgestaltet.

In einer Weiterbildung der nicht erfindungsgemäßen Ausgestaltung ist vorgesehen, dass die elektrische Maschine über die zweite Kupplung und mit der zweiten Übersetzung mit dem ersten Drehmomentaufteilungsgetriebesonnenrad und über eine weitere zweite Kupplung und mit einer weiteren zweiten Übersetzung mit dem zweiten Drehmomentaufteilungsgetriebesonnenrad unmittelbar wirkverbindbar ist. Entsprechend können gemäß den vorstehenden Ausführungen eine erste Kupplung oder mehrere erste Kupplungen einerseits sowie wenigstens eine zweite Kupplung oder mehrere zweite Kupplungen andererseits realisiert sein. Durch das Schließen der zweiten Kupplung und/oder der weiteren zweiten Kupplung kann das Drehmoment mittels des Drehmomentaufteilungsgetriebes präziser auf die erste Teilwelle und die zweite Teilwelle aufgeteilt werden, als dies mit einer einzigen zweiten Kupplung allein möglich wäre.

Schließlich kann in der nicht erfindungsgemäßen Ausgesttaltung vorgesehen sein, dass das Zwischengetriebeplanetenrad starr mit dem Differentialgetriebeplanetenrad verbunden ist. Auf eine derartige Ausgestaltung wurde vorstehend bereits eingegangen. Beispielsweise sind das Zwischengetriebeplanetenrad und das Differentialgetriebeplanetenrad als gemeinsames Planetenrad ausgestaltet. Alternativ können sie selbstverständlich in axialer Richtung bezüglich ihrer Drehachse voneinander beabstandet sein.

Die Erfindung wird nachfolgend anhand der in der Zeichnung dargestellten Ausführungsbeispiele näher erläutert, ohne dass eine Beschränkung der Erfindung erfolgt. Dabei zeigt:

Figur 1    eine Getriebeeinrichtung für ein Kraftfahrzeug in einer erster erfindungsgemäßen Ausführungsform,

Figur 2    die Getriebeeinrichtung in einer zweiten erfindungsgemäßen Ausführungsform,

Figur 3    eine dritte erfindungsgemäße Ausführungsform der Getriebeeinrichtung,

Figur 4    eine vierte erfindungsgemäße Ausführungsform der Getriebeeinrichtung,

Figur 5    die Getriebeeinrichtung in einer fünften Ausführungsform, die nicht unter den Gegenstand von Anspruch 1 fällt, sowie

Figur 6    die Getriebeeinrichtung in einer sechsten Ausführungsform, die ebenfalls nicht unter den Gegenstand von Anspruch 1 fällt.

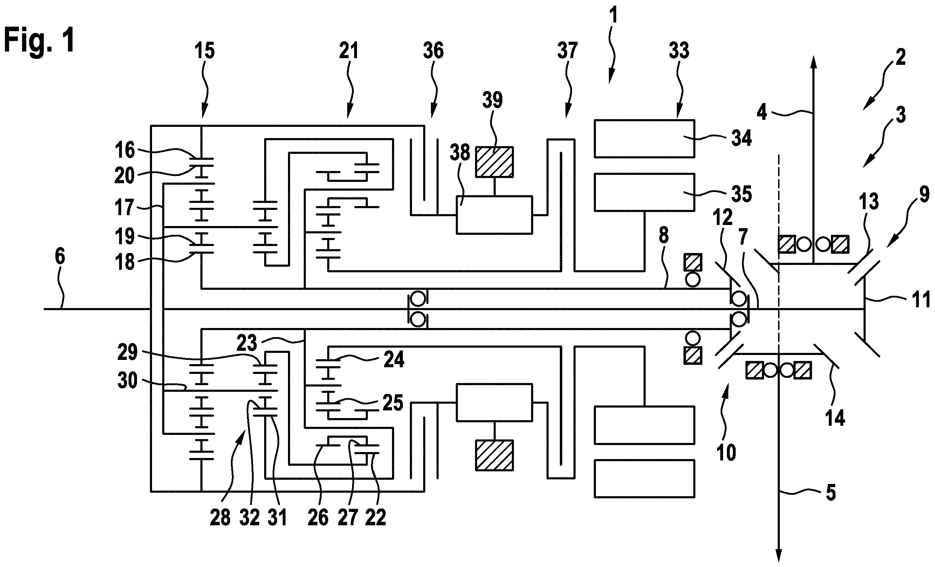

Die Figur 1 zeigt eine erste Ausführungsform einer Getriebeeinrichtung 1, die hier beispielsweise als Bestandteil eines Kraftfahrzeugs 2 vorgesehen ist, welches hier nicht näher dargestellt ist. Das Kraftfahrzeug 2 weist eine Radachse 3 mit einer ersten Teilwelle 4 und einer zweiten Teilwelle 5 auf. Die Radachse 3 beziehungsweise die Teilwellen 4 und 5 sind über die Getriebeeinrichtung 1 mittels eines Antriebsaggregats des Kraftfahrzeugs 2 antreibbar. Das Antriebsaggregat ist dabei mit einer Eingangswelle 6 der Getriebeeinrichtung 1 wirkverbunden oder wirkverbindbar. Die erste Teilwelle 4 ist dagegen an eine erste Ausgangswelle 7, die zweite Teilwelle 5 an eine zweite Ausgangswelle 8 der Getriebeeinrichtung 1 angeschlossen beziehungsweise mit der jeweiligen Ausgangswelle 7 beziehungsweise 8 wirkverbunden.

Die Wirkverbindung zwischen der ersten Teilwelle 4 und der ersten Ausgangswelle 7 ist über ein erstes Getriebe 9, die Wirkverbindung zwischen der zweiten Teilwelle 5 und der zweiten Ausgangswelle 8 über ein zweites Getriebe 10 hergestellt. Die Getriebe 9 und 10 können in Form von Winkelgetrieben vorliegen. Dabei sind sie vorzugsweise als Kegelradgetriebe ausgestaltet und verfügen insoweit über jeweils ein erstes Kegelrad 11 beziehungsweise 12 und ein zweites Kegelrad 13 beziehungsweise 14. Es kann gemäß der hier vorliegenden Ausführungsform der Getriebeeinrichtung 1 vorgesehen sein, dass die Teilwellen 4 und 5 beziehungsweise ihre Drehachsen in lateraler beziehungsweise radialer Richtung bezüglich der Drehachsen gegeneinander versetzt sind. Die Teilwellen 4 und 5 können jedoch alternativ auch koaxial zueinander angeordnet sein, also eine gemeinsame Drehachse aufweisen.

Die Ausgangswellen 7 und 8 können gegenüber den Teilwellen 4 und 5 beziehungsweise der Radachse 3 angewinkelt sein, liegen als unter einem Winkel von größer als 0° und kleiner als 180°, beispielsweise unter einem Winkel von 90°, zu diesen vor. Die entsprechende Umlenkung wird mit Hilfe der Getriebe 9 und 10, die in Form der Winkelgetriebe vorliegen, realisiert. Selbstverständlich können die Getriebe 9 und 10 alternativ als Stirnradgetriebe ausgeführt sein. Beispielsweise sind hierbei die Ausgangswellen 7 und 8 parallel zu den Teilwellen 4 und 5 angeordnet.

Die Getriebeeinrichtung 1 weist ein Differentialgetriebe 15 auf, über welches die erste Ausgangswelle 7 und die zweite Ausgangswelle 8 permanent mit der Eingangswelle 6 wirkverbunden sind. Zu diesem Zweck ist das Differentialgetriebe 15 vorzugsweise als Planetengetriebe ausgestaltet, dass ein Differentialgetriebehohlrad 16, einen Differentialgetriebeplanetenträger 17 und ein Differentialgetriebesonnenrad 18 aufweist. An dem Differentialgetriebeplanetenträger 17 sind wenigstens ein Differentialgetriebeinnenplanetenrad 19 sowie ein Differentialgetriebeaußenplanetenrad 20 drehbar gelagert. Das Differentialgetriebeaußenplanetenrad 20 ist dabei bezüglich einer Drehachse des Differentialgetriebeplanetenträgers 17 in radialer Richtung weiter außenliegend angeordnet als das Differentialgetriebeinnenplanetenrad 19. Differentialgetriebeinnenplanetenrad 19 kämmt mit dem Differentialgetriebesonnenrad 18 und dem Differentialgetriebeaußenplanetenrad 20. Letzteres kämmt wiederum mit dem Differentialgetriebehohlrad 16.

Es ist nun bevorzugt vorgesehen, dass die Eingangswelle 6 unmittelbar mit dem Differentialgetriebehohlrad 16 wirkverbunden ist, insbesondere starr und/oder permanent. Der Differentialgetriebeplanetenträger 17 ist vorzugsweise unmittelbar mit der ersten Ausgangswelle 7 und das Differentialgetriebesonnenrad 18 bevorzugt unmittelbar mit der zweiten Ausgangswelle 8 wirkverbunden, beispielsweise ebenfalls starr und/oder permanent. Die Getriebeeinrichtung 1 verfügt nun weiterhin über ein Drehmomentaufteilungsgetriebe 21, das ebenfalls als Planetengetriebe vorliegt. Das Drehmomentaufteilungsgetriebe 21 verfügt über ein Drehmomentaufteilungsgetriebehohlrad 22, einen Drehmomentaufteilungsgetriebeplanetenträger 23 und Drehmomentaufteilungsgetriebesonnenrad 24.

An dem Drehmomentaufteilungsgetriebeplanetenträger 23 sind wenigstens ein Drehmomentaufteilungsgetriebeinnenplanetenrad 25 sowie wenigstens ein Drehmomentaufteilungsgetriebeaußenplanetenrad 26 drehbar gelagert. Das Drehmomentaufteilungsgetriebeinnenplanetenrad 25 kämmt mit dem Drehmomentaufteilungsgetriebesonnenrad 24 sowie dem Drehmomentaufteilungsgetriebeaußenplanetenrad 26. Letzteres kämmt mit dem Drehmomentaufteilungsgetriebehohlrad 22 oder ist alternativ - wie hier vorgesehen - mit einem Hilfsplanetenrad 27 wirkverbunden, welches mit dem Drehmomentaufteilungsgetriebehohlrad 22 kämmt.

Das Differentialgetriebe 15 und das Drehmomentaufteilungsgetriebe 21 sind über ein Zwischengetriebe 28 miteinander wirkverbunden. Dieses ist ebenfalls als Planetengetriebe ausgestaltet und weist insoweit ein Zwischengetriebesonnenrad 29, einen Zwischengetriebeplanetenträger 30 sowie ein Zwischengetriebehohlrad 31 auf. Einem Zwischengetriebeplanetenträger 30 ist ein Zwischengetriebeplanetenrad 32 drehbar gelagert, das mit dem Zwischengetriebesonnenrad 29 und dem Zwischengetriebehohlrad 31 kämmt.

Der Zwischengetriebeplanetenträger 30 ist nun mit dem Differentialgetriebeplanetenträger 17 unmittelbar wirkverbunden, insbesondere starr und/oder permanent. Beispielsweise sind das Differentialgetriebeinnenplanetenrad 19 oder das Differentialgetriebeaußenplanetenrad 20 einerseits sowie das Zwischengetriebeplanetenrad 32 andererseits gemeinsam gelagert, sodass sie insoweit dieselbe Drehachse aufweisen. Anders ausgedrückt kann also das Zwischengetriebeplanetenrad 32 an dem Differentialgetriebeplanetenträger 17 gelagert sein, sodass der Zwischengetriebeplanetenträger 30 und der Differentialgetriebeplanetenträger 17 als gemeinsamer Planetenträger ausgestaltet sind.

Das Zwischengetriebesonnenrad 29 ist mit dem Drehmomentaufteilungsgetriebehohlrad 22 unmittelbar wirkverbunden, insbesondere starr und/oder permanent. Zusätzlich oder alternativ ist zudem das Zwischengetriebehohlrad 31 dem Drehmomentaufteilungsgetriebeplanetenträger 23 unmittelbar wirkverbunden, vorzugsweise ebenfalls starr und/oder permanent.

Die Getriebeeinrichtung 1 verfügt weiterhin über eine elektrische Maschine 33, von welcher hier ein Stator 34 und ein Rotor 35 angedeutet sind. Zudem sind eine erste Kupplung 36 und eine zweite Kupplung 37 vorgesehen. Mittels der ersten Kupplung 36 ist die elektrische Maschine 33 unmittelbar mit der Eingangswelle 6 wirkverbindbar, vorzugsweise mit einer ersten Übersetzung, die beispielsweise mit mittels einer Getriebestufe 38 realisiert ist. Die Getriebestufe 38 kann wenigstens ein Planetengetriebe aufweisen, wobei vorzugsweise ein Hohlrad dieses Planetengetriebes festgesetzt ist, insbesondere bezüglich einer Gehäusewand 39 der Getriebeeinrichtung 1.

Über die zweite Kupplung 37 ist dagegen die elektrische Maschine 33 mit dem Drehmomentaufteilungsgetriebe 21 wirkverbindbar, wobei eine zweite Übersetzung vorgesehen ist. Die zweite Übersetzung kann von der ersten Übersetzung verschieden sein, insbesondere ist die zweite Übersetzung gleich eins. Vorzugsweise ist die elektrische Maschine 33 über die zweite Kupplung 37 unmittelbar mit dem Drehmomentaufteilungsgetriebesonnenrad 24 wirkverbindbar.

Mit Hilfe der hier vorgestellten Getriebeeinrichtung 1 kann sowohl die Funktionalität des Differentialgetriebes 15 als auch eine "Torque Vectoring"-Funktionalität unter Verwendung des Drehmomentaufteilungsgetriebes 21 realisiert werden. Die elektrische Maschine 33 wird dabei entweder zum Einstellen der gewünschten Aufteilung des an der Eingangswelle 6 anliegenden Drehmoments auf die erste Ausgangswelle 7 und die zweite Ausgangswelle 8 mittels des Drehmomentaufteilungsgetriebes 21 herangezogen. Alternativ kann sie über die erste Kupplung 36 mit der Eingangswelle 6 unmittelbar gekoppelt werden, sodass sie zum Bereitstellen des Drehmoments an der Eingangswelle 6 einerseits oder zum Bereitstellen elektrischer Energie in einem Generatorbetrieb andererseits herangezogen werden.

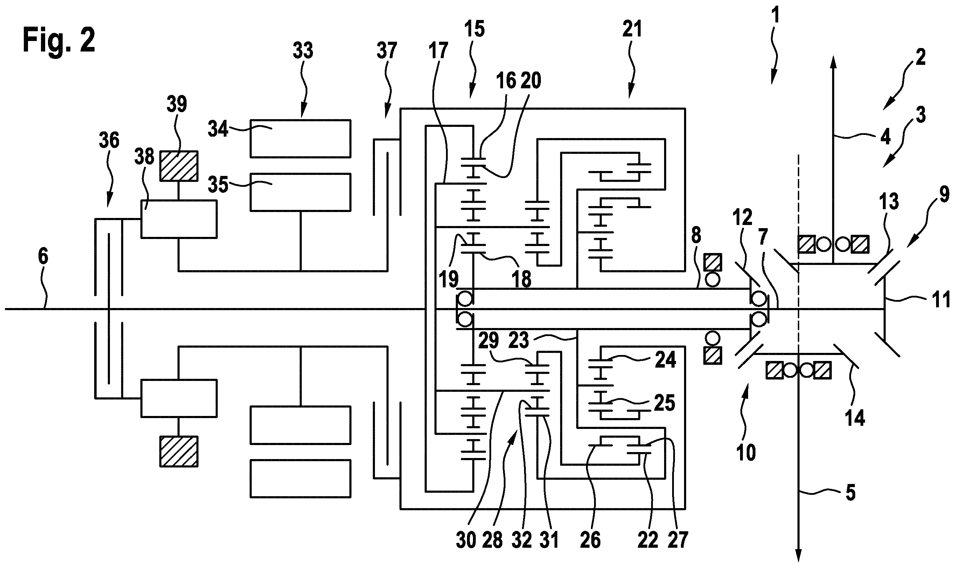

Die Figur 2 zeigt eine zweite Variante der Getriebeeinrichtung 1, wobei diese ähnlich der ersten Ausführungsform ausgebildet ist, sodass insoweit auf die vorstehenden Ausführungen verwiesen wird. Der Unterschied liegt in einer alternativen Anordnung der elektrischen Maschine 33, der ersten Kupplung 36 sowie der zweiten Kupplung 37.

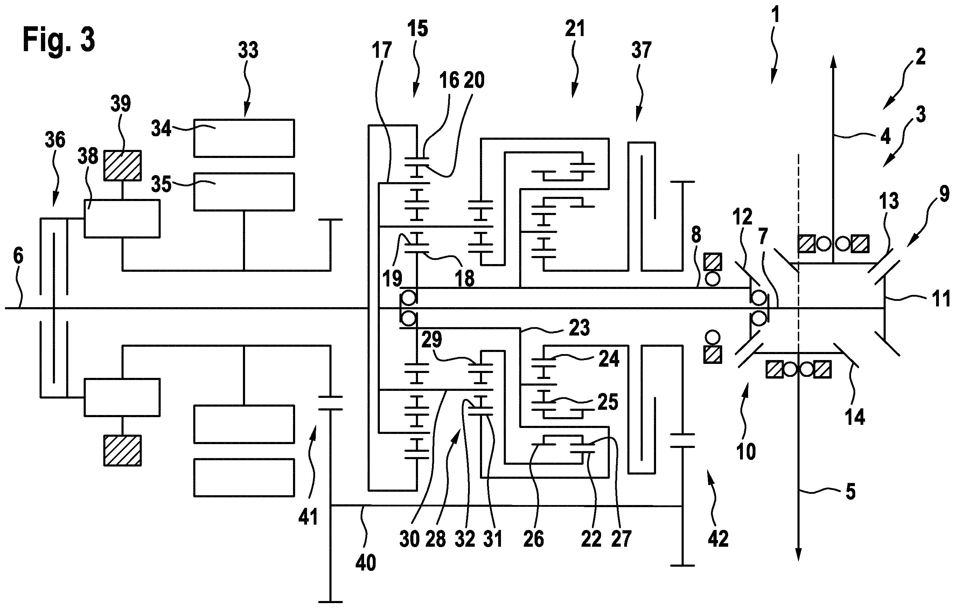

Die Figur 3 zeigt eine dritte Ausführungsform der Getriebeeinrichtung 1, welche der zweiten Ausführungsform ähnelt. Nachfolgend soll insoweit lediglich auf die Unterschiede eingegangen werden. Es wird deutlich, dass die alternative Anordnung der einzelnen Elemente, insbesondere der elektrischen Maschine 33 erzielt wird, indem eine Vorliegewelle 40 vorgesehen ist, über welche die elektrische Maschine 33 mit der zweiten Kupplung 37 wirkverbunden ist, vorzugsweise starr und/oder permanent. Die Vorliegewelle 40 ist dabei über eine erste Getriebestufe 41 an die elektrische Maschine 33 und über eine zweite Getriebestufe 42 an die zweite Kupplung 37 angeschlossen. Insoweit kann mit der hier dargestellten Variante auf einfache Art und Weise eine zweite Übersetzung realisiert werden, welche ebenfalls von eins verschieden ist.

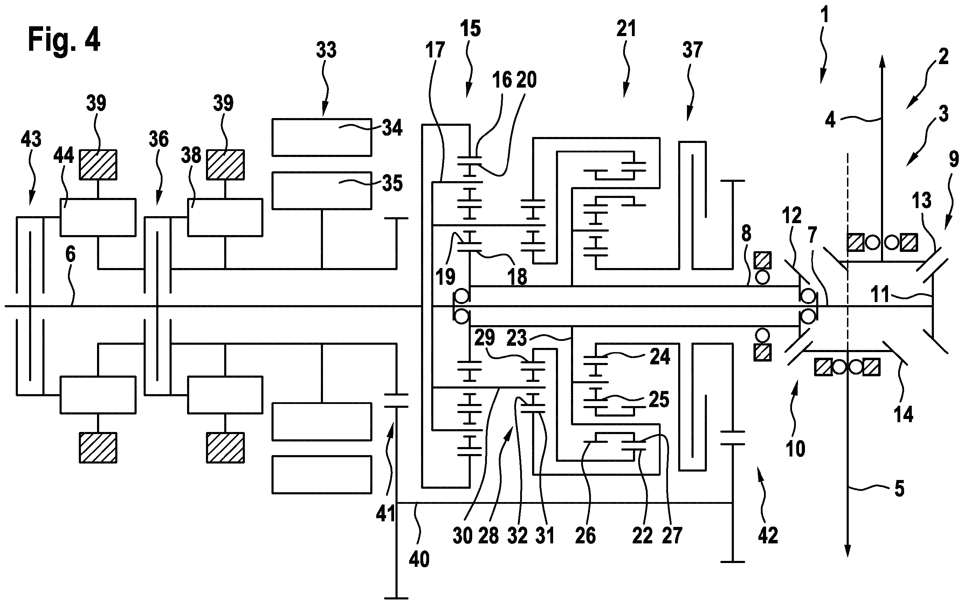

Die Figur 4 zeigt eine vierte Ausführungsform der Getriebeeinrichtung, welche der dritten Ausführungsform weitgehend entspricht. Zusätzlich ist hier nun jedoch eine weitere erste Kupplung 43 vorgesehen, welche über eine weitere Getriebestufe 44 mit der Getriebestufe 38 wirkverbindbar ist. Insoweit ist die erste Kupplung 36 lediglich über die Getriebestufe 38, die weitere erste Kupplung 43 der gegenüber sowohl die Getriebestufe 38 als auch die Getriebestufe 44 mit der elektrischen Maschine 33 wirkverbunden. Über die Kupplung 43 kann analog zu der Kupplung 36 eine Wirkverbindung zwischen der elektrischen Maschine 33 und der Eingangswelle 6 hergestellt werden. Je nachdem, welche der Kupplungen 36 und 43 geschlossen wird, kann insoweit eine unterschiedliche Übersetzung zwischen der elektrischen Maschine 33 und der Eingangswelle 6 realisiert werden.

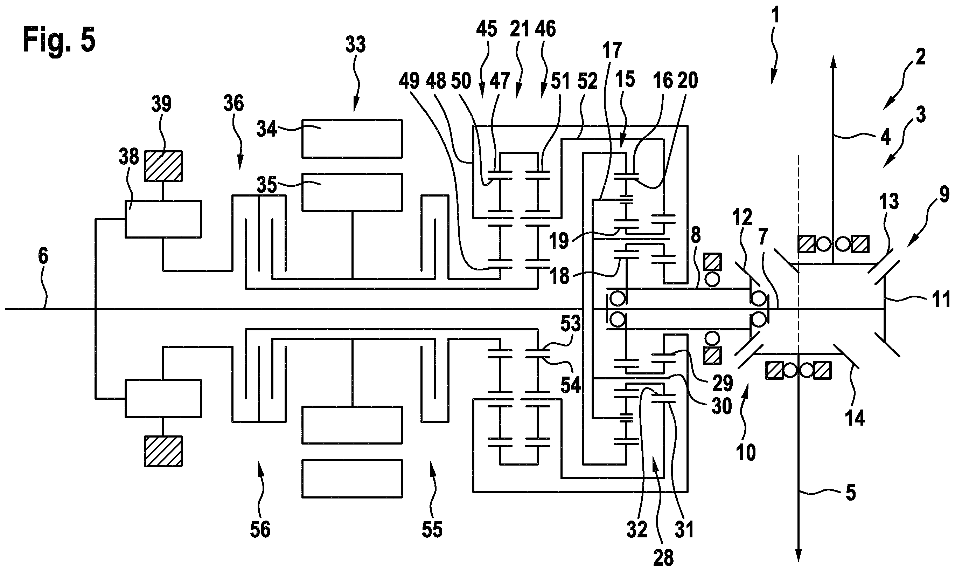

Die Figur 5 zeigt eine fünfte Ausführungsform der Getriebeeinrichtung 1, die nicht unter den Gegenstand von Anspruch 1 fällt. Grundsätzlich wird erneut auf die vorstehenden Ausführungen verwiesen, im Nachfolgenden jedoch auf die Unterschiede eingegangen. Das Drehmomentaufteilungsgetriebe 21 liegt nun als Planetengetriebe mit einem ersten Planetenradsatz 45 und einem zweiten Planetenradsatz 46 ausgebildet ist. Der erste Planetenradsatz 45 weist ein erstes Drehmomentaufteilungsgetriebehohlrad 47, einen ersten Drehmomentaufteilungsgetriebeplanetenträger 48 und ein erstes Drehmomentaufteilungsgetriebesonnenrad 49 auf. An dem ersten Drehmomentaufteilungsgetriebeplanetenträger 48 ist ein erstes Drehmomentaufteilungsgetriebeplanetenrad 50 drehbar gelagert. Der zweite Planetenradsatz 46 weist analog ein zweites Drehmomentaufteilungsgetriebehohlrad 51, einen zweiten Drehmomentaufteilungsgetriebeplanetenträger 52 und ein zweites Drehmomentaufteilungsgetriebesonnenrad 53 auf.

An dem zweiten Drehmomentaufteilungsgetriebeplanetenträger ist ein zweites Drehmomentaufteilungsgetriebeplanetenrad 54 drehbar gelagert. Das erste Drehmomentaufteilungsgetriebeplanetenrad 50 kämmt mit dem ersten Drehmomentaufteilungsgetriebehohlrad 47 und dem ersten Drehmomentaufteilungsgetriebesonnenrad 49. Das zweite Drehmomentaufteilungsgetriebeplanetenrad 54 kämmt mit dem zweiten Drehmomentaufteilungsgetriebehohlrad 51 und dem zweiten Drehmomentaufteilungsgetriebesonnenrad 53. Das erste Drehmomentaufteilungsgetriebehohlrad 47 und das zweite Drehmomentaufteilungsgetriebehohlrad 51 können als gemeinsames Drehmomentaufteilungsgetriebehohlrad ausgebildet sein.

Der erste Drehmomentaufteilungsgetriebeplanetenträger 48 ist mit dem Zwischengetriebesonnenrad 29 und/oder der zweite Drehmomentaufteilungsgetriebeplanetenträger 52 mit dem Zwischengetriebehohlrad 31 unmittelbar wirkverbunden, insbesondere starr und/oder permanent. Das Zwischengetriebe 28 weist hier nun die Besonderheit auf, dass das Zwischengetriebeplanetenrad 32 unmittelbar mit dem Differentialgetriebeinnenplanetenrad 19 oder alternativ dem Differentialgetriebeaußenplanetenrad 20 wirkverbunden ist, vorzugsweise starr und/oder permanent. Die genannten Planetenräder können insoweit als gemeinsames Planetenrad vorliegen.

Gemäß den vorstehenden Ausführungen ist weiterhin vorgesehen, dass die elektrische Maschine 33 über die erste Kupplung 36 mit der Eingangswelle 6 koppelbar ist, vorzugsweise über die Getriebestufe 38. Im Gegensatz zu den vorstehenden Ausführungen sind jedoch anstelle der zweiten Kupplung 37 zwei zweite Kupplungen 55 und 56 vorgesehen. Mit Hilfe der zweiten Kupplung 55 ist die elektrische Maschine 33 mit dem ersten Drehmomentaufteilungsgetriebesonnenrad 49 wirkverbindbar. Über die weitere zweite Kupplung 56 ist das zweite Drehmomentaufteilungsgetriebesonnenrad 53 über die Getriebestufe 38 mit der Eingangswelle 6 wirkverbindbar. Bei dieser Ausführungsform muss bei einer Umschaltung von einem TSG-Betrieb unter Verwendung der ersten Kupplung 36 auf einen "Torque Vectoring"-Betrieb unter Verwendung der Kupplungen 55 und 56 die elektrische Maschine 33 nicht bis in ihren Stillstand abgebremst werden.

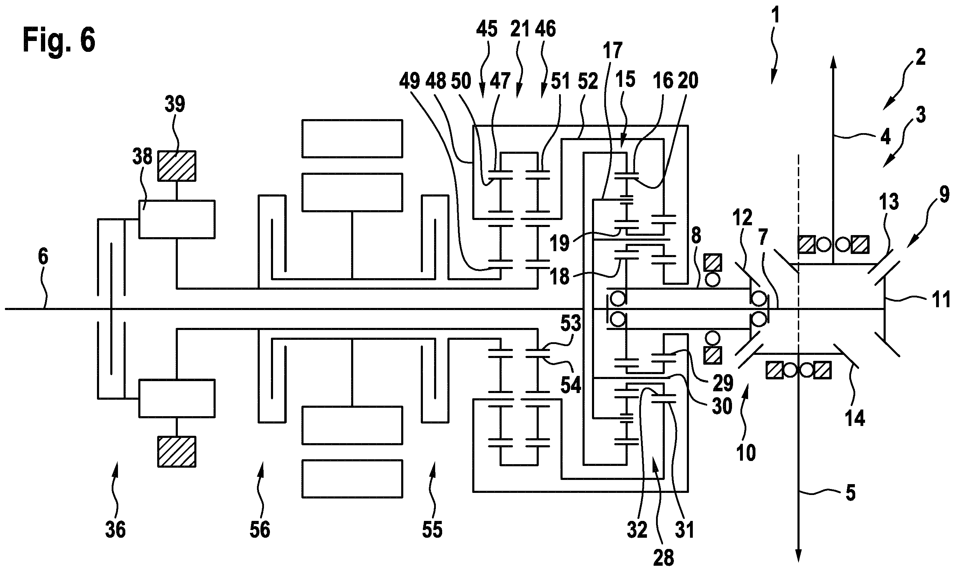

Die Figur 6 zeigt eine sechste Ausführungsform der Getriebeeinrichtung 1, welche ebenfalls nicht nicht unter den Gegenstand von Anspruch 1 fällt und an die fünfte Ausführungsform angelehnt ist. Insoweit wird auf die vorstehenden Ausführungen verwiesen. Der Unterschied liegt hier in einer anderen Anordnung der Kupplungen 36 und 56 zueinander. Während im Rahmen der fünften Ausführungsform der Getriebeeinrichtung 1 die Getriebestufe 38 auf der der elektrischen Maschine 3 abgewandten Seite der Kupplung 36 angeordnet war, ist nun die Getriebestufe 38 in der Wirkverbindung zwischen der Getriebestufe 38 und der Eingangswelle 6 vorgesehen. Weiterhin ist das Drehmomentaufteilungsgetriebesonnenrad 53 über die Getriebestufe 38 mittels der Kupplung 36 mit der Eingangswelle 6 wirkverbindbar.

## Patentansprüche

1. Getriebeeinrichtung (1) für eine Kraftfahrzeug (2), die eine mit einem Antriebsaggregat wirkverbindbare Eingangswelle (6) sowie eine erste Ausgangswelle (7) und eine zweite Ausgangswelle (8) aufweist, wobei die erste Ausgangswelle (7) über ein erstes Getriebe (9) mit einer ersten Teilwelle (4) einer Radachse (3) und die zweite Ausgangswelle (8) über ein zweites Getriebe (10) mit einer zweiten Teilwelle (5) der Radachse (3) wirkverbindbar oder wirkverbunden ist, wobei die Getriebeeinrichtung (1) ein Differentialgetriebe (15) aufweist, über das die erste Ausgangswelle (7) und die zweite Ausgangswelle (8)

permanent mit der Eingangswelle (6) wirkverbunden sind, und wobei die Getriebeeinrichtung (1) über eine elektrische Maschine (33) verfügt, die über eine erste Kupplung (36) und mit einer ersten Übersetzung mit der Eingangswelle (6) und über eine zweite Kupplung (37;55) und mit einer zweiten Übersetzung mit einem Drehmomentaufteilungsgetriebe (21) der Getriebeeinrichtung (1) wirkverbindbar ist, wobei das Drehmomentaufteilungsgetriebe (21) als Planetengetriebe vorliegt, das ein Drehmomentaufteilungsgetriebehohlrad (22), einen Drehmomentaufteilungsgetriebeplanetenträger (23) und ein Drehmomentaufteilungsgetriebesonnenrad (24) aufweist, wobei der Drehmomentaufteilungsgetriebeplanetenträger (23) starr und/oder permanent mit der zweiten Ausgangswelle (8) wirkverbunden ist, **dadurch gekennzeichnet, dass** das Drehmomentaufteilungsgetriebehohlrad (22) permanent mit dem Differentialgetriebe (15) und das Drehmomentaufteilungsgetriebesonnenrad (24) über die zweite Kupplung (37) unmittelbar mit der elektrischen Maschine (33) wirkverbunden ist, wobei an dem Drehmomentaufteilungsgetriebeplanetenträger (23) ein Drehmomentaufteilungsgetriebeinnenplanetenrad (25) und ein mit dem Drehmomentaufteilungsgetriebeinnenplanetenrad (25) kämmendes Drehmomentaufteilungsgetriebeaußenplanetenrad (26) drehbar gelagert sind, wobei das Drehmomentaufteilungsgetriebeinnenplanetenrad (25) mit dem Drehmomentaufteilungsgetriebesonnenrad (24) kämmt, und wobei das Drehmomentaufteilungsgetriebeaußenplanetenrad (26) mit dem Drehmomentaufteilungsgetriebehohlrad (22) kämmt oder mit einem mit dem Drehmomentaufteilungsgetriebehohlrad (22) kämmenden Hilfsplanetenrad (27) wirkverbunden ist.

2. Getriebeeinrichtung nach Anspruch 1, **dadurch gekennzeichnet, dass** das Differentialgetriebe (15) als Planetengetriebe vorliegt, das ein Differentialgetriebehohlrad (16), einen Differentialgetriebeplanetenträger (17) und ein Differentialgetriebesonnenrad (18) aufweist, wobei die Eingangswelle (6) mit dem Differentialgetriebehohlrad (16), der Differentialgetriebeplanetenträger (17) mit der ersten Ausgangswelle (7) und das Differentialgetriebesonnenrad (18) mit der zweiten Ausgangswelle (8) unmittelbar wirkverbunden ist.

3. Getriebeeinrichtung nach Anspruch 2, **dadurch gekennzeichnet, dass** an dem Differentialgetriebeplanetenträger (17) wenigstens ein Differentialgetriebeinnenplanetenrad (19) und ein mit dem Differentialgetriebeinnenplanetenrad (19) kämmendes Differentialgetriebeaußenplanetenrad (20) drehbar gelagert sind, wobei das Differentialgetriebeaußenplanetenrad (20) mit dem Differentialgetriebehohlrad (16) und das Differentialgetriebeinnenplanetenrad (19) mit dem Differentialgetriebesonnenrad (18) kämmt.

4. Getriebeeinrichtung nach einem der vorhergehenden Ansprüche, **dadurch gekennzeichnet, dass** das Drehmomentaufteilungsgetriebe (21) mit der zweiten Ausgangswelle (8) unmittelbar und mit der ersten Ausgangswelle (7) über das Differentialgetriebe (15) wirkverbunden ist.

5. Getriebeeinrichtung nach einem der vorhergehenden Ansprüche, **dadurch gekennzeichnet, dass** das Differentialgetriebe (15) und das Drehmomentaufteilungsgetriebe (21) über ein Zwischengetriebe (28) wirkverbunden sind, das als Planetengetriebe vorliegt und ein Zwischengetriebesonnenrad (29), einen Zwischengetriebeplanetenträger (30) und ein Zwischengetriebehohlrad (31) aufweist, wobei an dem Zwischengetriebeplanetenträger (30) ein Zwischengetriebeplanetenrad (32) drehbar gelagert ist, das mit dem Zwischengetriebesonnenrad (29) und dem Zwischengetriebehohlrad (31) kämmt.

6. Getriebeeinrichtung nach Anspruch 5, **dadurch gekennzeichnet, dass** der Zwischengetriebeplanetenträger (30) mit dem Differentialgetriebeplanetenträger (17), das Zwischengetriebesonnenrad (29) mit dem Drehmomentaufteilungshohlrad (22) und/oder das Zwischengetriebehohlrad (31) mit dem Drehmomentaufteilungsplanetenträger (23) unmittelbar wirkverbunden ist.

## Claims

1. Gearing device (1) for a motor vehicle (2) which has an input shaft (6) which can be connected operatively with a drive assembly, as well as a first output shaft (7) and a second output shaft (8), wherein the first output shaft (7) can be connected operatively or is connected operatively via a first gearing (9) with a first partial shaft (4) of a wheel axle (3) and the second output shaft (8) can be connected operatively or is connected operatively via a second gearing (10) with a second partial shaft (5) of the wheel axle (3), wherein the gearing device (1) has a differential gear (15) by means of which the first output shaft (7) and the second output shaft (8) are permanently operatively connected with the input shaft (6), and wherein the gearing device (1) has an electric machine (33) which can be operatively connected via a first clutch (36) and with a first translation with the input shaft (6) and via a second clutch (37; 55) and with a second translation with a torque splitting gearbox (21) of the gearing device (1), wherein the torque splitting gearbox (21) is present as a planetary gear which has a torque splitting gearbox ring gear (22), a torque splitting gearbox planet carrier (23) and a torque splitting gearbox sun gear (24), wherein the torque splitting gearbox planet carrier (23) is rigidly and/or permanently operatively connected with the second output shaft (8), **characterised in that** the torque splitting gearbox ring gear (22) is permanently operatively connected with the differential gear (15) and the torque splitting gearbox sun gear (24) is operatively connected via the second clutch (37) directly with the electric machine (33), wherein a torque splitting gearbox inner planetary gear (25) and a torque splitting gearbox outer planetary gear (26) which meshes with the torque splitting gearbox inner planetary gear (25) are rotatably mounted on the torque splitting gearbox planet carrier (23), wherein the torque splitting gearbox inner planetary gear (25) meshes with the torque splitting gearbox sun gear (24), and wherein the torque splitting gearbox outer planetary gear (26) meshes with the torque splitting gearbox ring gear (22) or is operatively connected with an auxiliary planetary gear (27) meshing with the torque splitting gearbox ring gear (22).

2. Gearing device according to claim 1, **characterised in that** the differential gear (15) is present as a planetary gear which has a differential gear ring gear (16), a differential gear planet carrier (17) and a differential gear sun gear (18), wherein the input shaft (6) is directly operatively connected with the differential gear ring gear (16), the differential gear planet carrier (17) is directly operatively connected with the first output shaft (7), and the differential gear sun gear (18) is directly operatively connected with the second output shaft (8).

3. Gearing device according to claim 2, **characterised in that** at least one differential gear inner planetary gear (19) and a differential gear outer planetary gear (20) meshing with the differential gear inner planetary gear (19) are rotatably mounted on the differential gear planet carrier (17), wherein the differential gear outer planetary gear (20) meshes with the differential gear ring gear (16) and the differential gear inner planetary gear (19) meshes with the differential gear sun gear (18).

4. Gearing device according to any of the preceding claims, **characterised in that** the torque splitting gearbox (21) is operatively connected directly with the second output shaft (8) and is operatively connected with the first output shaft (7) via the differential gear (15).

5. Gearing device according to any of the preceding claims, **characterised in that** the differential gear (15) and the torque splitting gearbox (21) are operatively connected via an intermediate gear (28), which is present as a planetary gear and has an intermediate gear sun gear (29), an intermediate gear planet carrier (30) and an intermediate gear ring gear (31), wherein an intermediate gear planetary gear (32) which meshes with the intermediate gear sun gear (29) and the intermediate gear ring gear (31) is rotatably mounted on the intermediate gear planet carrier (30).

6. Gearing device according to claim 5, **characterised in that** the intermediate gear planet carrier (30) is directly operatively connected with the differential gear planet carrier (17), the intermediate gear sun gear (29) is directly operatively connected with the torque splitting ring gear (22) and/or the intermediate gear ring gear (31) is directly operatively connected with the torque splitting gearbox planet carrier (23).

**Revendications**

1. Dispositif de transmission (1) destiné à un véhicule automobile (2), qui présente un arbre d'entrée (6) pouvant être relié de manière fonctionnelle à un groupe d'entraînement ainsi qu'un premier arbre de sortie (7) et un second arbre de sortie (8), dans lequel le premier arbre de sortie (7) peut être relié ou est relié de manière fonctionnelle à une première partie d'arbre (4) d'un axe de roue (3) par l'intermédiaire d'un premier engrenage (9) et le second arbre de sortie (8) peut être relié ou est relié de manière fonctionnelle à une seconde partie d'arbre (5) de l'axe de roue (3) par l'intermédiaire d'un second engrenage (10), dans lequel le dispositif de transmission (1) présente un engrenage différentiel (15), par l'intermédiaire duquel le premier arbre de sortie (7) et le second arbre de sortie (8) sont reliés de manière fonctionnelle en permanence à l'arbre d'entrée (6), et dans lequel le dispositif de transmission (1) est muni d'un moteur électrique (33), qui peut être relié de manière fonctionnelle à l'arbre d'entrée (6) par l'intermédiaire d'un premier embrayage (36) et par une première démultiplication, et à un engrenage de répartition de couple de rotation (21) du dispositif de transmission (1) par l'intermédiaire d'un second embrayage (37 ; 55) et par une seconde démultiplication, dans lequel l'engrenage de répartition de couple de rotation (21) se présente sous la forme d'un engrenage planétaire qui présente une couronne d'engrenage de répartition de couple de rotation (22), un porte-satellite d'engrenage de répartition de couple de rotation (23) et une roue solaire de répartition de couple de rotation (24), dans lequel le porte-satellite de répartition de couple de rotation (23) est relié de manière fonctionnelle rigide et/ou permanente au second arbre de sortie (8), **caractérisé en ce que** la couronne d'engrenage de répartition de couple de rotation (22) est reliée de manière fonctionnelle en permanence à l'engrenage différentiel (15) et la roue solaire de répartition de couple de rotation (24) est relié de manière fonctionnelle directement au moteur électrique (33) par l'intermédiaire du second embrayage (37), dans lequel au niveau du porte-satellite d'engrenage de répartition de couple de rotation (23), une roue planétaire interne d'engrenage de répartition de couple de rotation (25) et une roue planétaire externe d'engrenage de répartition de couple de rotation (26) engrenant avec la roue planétaire interne d'engrenage de répartition de couple de rotation (25) sont montées de manière rotative, dans lequel la roue planétaire interne d'engrenage de répartition de couple de rotation (25) engrène avec la roue solaire de répartition de couple de rotation (24), et dans lequel la roue planétaire externe d'engrenage de répartition de couple de rotation (26) engrène avec la couronne d'engrenage de répartition de couple de rotation (22) ou est reliée de manière fonctionnelle à un engrenage planétaire auxiliaire (27) engrenant avec la couronne d'engrenage de répartition de couple de rotation (22).

2. Dispositif de transmission selon la revendication 1, **caractérisé en ce que** l'engrenage différentiel (15) se présente sous la forme d'un engrenage planétaire, qui présente une couronne d'engrenage différentielle (16), un porte-satellite d'engrenage différentiel (17) et une roue solaire d'engrenage différentiel (18), dans lequel l'arbre d'entrée (6) est relié de manière fonctionnelle directement avec la couronne d'engrenage différentielle (16), le porte-satellite d'engrenage différentiel (17) avec le premier arbre de sortie (7) et la roue solaire d'engrenage différentiel (18) avec le second arbre de sortie (8).

3. Dispositif de transmission selon la revendication 2, **caractérisé en ce qu'**au niveau du porte-satellite d'engrenage de différentiel (17), au moins une roue planétaire interne d'engrenage différentiel (19) et une roue planétaire externe d'engrenage différentiel (20) engrenant avec la roue planétaire interne d'engrenage différentiel (19) sont montées de manière rotative, dans lequel la roue planétaire externe d'engrenage différentiel (20) engrène avec la couronne d'engrenage différentielle (16) et la roue planétaire interne d'engrenage différentiel (19) engrène avec la roue solaire d'engrenage différentiel (18).

4. Dispositif de transmission selon l'une des revendications précédentes, **caractérisé en ce que** l'engrenage de répartition de couple de rotation (21) est relié de manière fonctionnelle directement au second arbre de sortie (8) et au premier arbre de sortie (7) par l'intermédiaire de l'engrenage différentiel (15).

5. Dispositif de transmission selon l'une des revendications précédentes, **caractérisé en ce que** l'engrenage différentiel (15) et l'engrenage de répartition de couple de rotation (21) sont reliés de manière fonctionnelle par l'intermédiaire d'un engrenage intermédiaire (28), qui se présente sous la forme d'un engrenage planétaire et présente une roue solaire intermédiaire (29), un porte-satellite d'engrenage intermédiaire (30) et une couronne d'engrenage intermédiaire (31), dans lequel une roue planétaire intermédiaire (32) est montée de manière rotative au niveau du porte-satellite d'engrenage intermédiaire (30), qui engrène avec la roue solaire intermédiaire (29) et la couronne d'engrenage intermédiaire (31).

6. Dispositif de transmission selon la revendication 5, **caractérisé en ce que** le porte-satellite d'engrenage intermédiaire (30) est relié de manière fonctionnelle directement avec le porte-satellite d'engrenage différentiel (17), la roue solaire intermédiaire (29) avec la couronne de répartition de couple de rotation (22) et/ou la couronne d'engrenage intermédiaire (31) avec le porte-satellite de répartition de couple de rotation (23).

Fig. 1

Fig. 2

**Fig. 3**

EP 3 212 447 B1

**Fig. 4**

EP 3 212 447 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013202382 A1